# EUROPÄISCHE PATENTANMELDUNG

(11) **EP 3 034 816 A1**
(43) Veröffentlichungstag der Anmeldung: **22.06.2016**
(21) Anmeldenummer: 15197342.7
(22) Anmeldetag: 01.12.2015
(51) Int. Cl.: F01D 25/18, B01D 45/12, F02C 7/06

(54) **FLUGTRIEBWERK MIT EINER VORRICHTUNG ZUM ABSCHEIDEN VON ÖL**

(30) Priorität: 18.12.2014 DE 102014119066
(71) Anmelder: Rolls-Royce Deutschland Ltd & Co KG, 15827 Blankenfelde-Mahlow (DE)
(72) Erfinder: Burghardt, Sascha, 15370 Vogelsdorf (DE)
(74) Vertreter: Schmidt, Martin Michael

(57) **Zusammenfassung**

Es wird ein Flugtriebwerk (1) mit wenigstens zwei jeweils um eine Zentralachse (36) des Flugtriebwerks (1) drehbar gelagerten Wellen (9, 10) beschrieben. Eine erste Welle (10) wird im Betrieb des Flugtriebwerks (1) mit einer niedrigeren Drehzahl als eine zweite Welle (9) des Flugtriebwerks (1) angetrieben. Es ist eine wenigstens bereichsweise von einer der Wellen (9, 10) begrenzte Kammer (12) vorgesehen, innerhalb der eine mit einer der Wellen (9, 10) des Flugtriebwerks (1) in Wirkverbindung stehende Vorrichtung (18) zum Abscheiden von Öl aus einem Luft-Öl-Volumenstrom angeordnet ist. Die Vorrichtung (18) zum Abscheiden von Öl steht in Wirkverbindung mit der zweiten Welle (9) des Flugtriebwerks (1).

## Beschreibung

Die Erfindung betrifft ein Flugtriebwerk mit wenigstens zwei jeweils um eine Zentralachse des Flugtriebwerks drehbar gelagerten Wellen gemäß der im Oberbegriff des Patentanspruches 1 näher definierten Art.

Aus der US 2009/0133961 A1 ist ein Strahltriebwerk mit einer Niederdruckwelle und einer Hochdruckwelle bekannt. Im Betrieb des Strahltriebwerks wird ölhaltige Verbrauchsluft einer Lagerkammer einer Vorrichtung zum Abscheiden von Öl zugeführt, die als Zentrifugalölabscheider ausgeführt ist und auch als Breather bezeichnet wird. Die Vorrichtung ist drehfest mit der Niederdruckwelle des Strahltriebwerks verbunden und wird somit im Betrieb des Strahltriebwerks mit der Niederdruckwelle um eine Zentralachse des Strahltriebwerks angetrieben. Aus der der Vorrichtung zugeführten Verbrauchsluft bzw. dem Luft-Öl-Volumenstrom werden im Betrieb des Strahltriebwerks Ölpartikel abgeschieden und so aus der Luft gefiltert. Das mittels dieser Vorgehensweise abgeschiedene Öl wird über Ausnehmungen der Vorrichtung wieder in die Lagerkammer eingeleitet, wohingegen die gereinigte Luft durch die als Hohlwelle ausgeführte Niederdruckwelle an die Umwelt abgegeben wird. Unter gereinigter Luft wird ein aus der Vorrichtung abgeführter Fluidvolumenstrom verstanden, der eine geringere Ölbeladung als der dem Ölabscheider zugeführte Luft-Öl-Volumenstrom aufweist.

Da die Drehzahl der Niederdruckwelle im Betrieb des Strahltriebwerks relativ gering ist und die Abscheideleistung der Vorrichtung in nicht unerheblichem Umfang von der Drehzahl der Niederdruckwelle abhängig ist, weist der aus der Vorrichtung abgeführte Fluidvolumenstrom eine unerwünscht hohe Ölbeladung auf.

Des Weiteren ist in der EP 2 559 869 A1 ein Strahltriebwerk mit einer Vorrichtung zum Abscheiden von Öl beschrieben. Die Vorrichtung ist im Bereich einer radial außerhalb von Lagerkammern des Strahltriebwerks angeordneten Hilfsgerätegetriebeeinrichtung mit einer Hilfsgerätegetriebewelle der Hilfsgerätegetriebeeinrichtung verbunden. Aufgrund entsprechend vorliegender Übersetzungsverhältnisse wird die Vorrichtung im Betrieb des Strahltriebwerks von der Hilfsgerätegetriebewelle mit einer für eine gewünscht hohe Abscheideleistung erforderlichen Drehzahl angetrieben.

Allerdings ist ein derartiges Strahltriebwerk nachteilhafterweise durch hohe Herstellkosten gekennzeichnet und weist zudem ein hohes Gewicht bei gleichzeitig großem Bauraumbedarf auf. Dies resultiert aus der Tatsache, dass der Antrieb der Vorrichtung über eine separate Hilfsgerätegetriebewelle der Hilfsgerätegetriebeeinrichtung erfolgt. Weiterhin sind bei einem derartigen Strahltriebwerk Öl- und Luftleitungen erforderlich, um das Luft-Öl-Gemisch aus den Lagerkammern zu der im Bereich der Hilfsgerätegetriebeeinrichtung angeordneten Vorrichtung zu führen.

Der vorliegenden Erfindung liegt die Aufgabe zugrunde, ein einfach und kostengünstig ausführbares Flugtriebwerk mit einer Vorrichtung zum Abscheiden von Öl zur Verfügung zu stellen, mit welchem im Betrieb des Flugtriebwerks Öl in gewünschtem Umfang aus einem der Vorrichtung zugeführten Luft-Öl-Volumenstrom abscheidbar ist.

Erfindungsgemäß wird diese Aufgabe mit einem Flugtriebwerk mit den Merkmalen des Patentanspruches 1 gelöst.

Das erfindungsgemäße Flugtriebwerk ist mit wenigstens zwei jeweils um eine Zentralachse des Flugtriebwerks drehbar gelagerten Wellen ausgeführt. Eine erste Welle weist im Betrieb des Flugtriebwerks eine niedrigere Drehzahl als eine zweite Welle des Flugtriebwerks auf. Es ist eine wenigstens bereichsweise von einer der Wellen begrenzte Kammer vorgesehen, innerhalb der eine mit einer der Wellen des Flugtriebwerks in Wirkverbindung stehende Vorrichtung zum Abscheiden von Öl aus einem Luft-Öl-Volumenstrom angeordnet ist.

Erfindungsgemäß ist vorgesehen, dass die Vorrichtung zum Abscheiden von Öl in Wirkverbindung mit der zweiten Welle des Flugtriebwerks steht.

Dadurch, dass bei dem erfindungsgemäß ausgeführten Flugtriebwerk bzw. Strahltriebwerk die Vorrichtung zum Abscheiden von Öl in Wirkverbindung mit der insbesondere eine Hochdruckwelle darstellenden und im Betrieb des Flugtriebwerks eine höhere Drehzahl als die erste Welle aufweisenden zweiten Welle des Flugtriebwerks steht, wird die Vorrichtung im Betrieb des Flugtriebwerks aufgrund der größeren Drehzahlen der zweiten Welle in einem für eine hohe Abscheideleistung erforderlichen Umfang auf bauraum- und kostengünstige Art und Weise angetrieben. Im Unterschied zu einer Ausführung mit einer im Bereich einer Hilfsgerätegetriebeeinrichtung angeordneten Vorrichtung ist das erfindungsgemäße Flugtriebwerk vorteilhafterweise einfach, kostengünstig und gewichtsoptimiert ausgeführt, da die Hilfsgerätegetriebeeinrichtung ohne eine ausschließlich zum Antrieb der Vorrichtung vorgesehene Hilfsgerätegetriebewelle ausgeführt ist. Zusätzlich sind aufgrund der Anordnung der Vorrichtung im Bereich der Kammer keine bzw. nur sehr kurze Luft- bzw. Ölleitungen vorzusehen, um einen Luft-Öl-Volumenstrom aus den Lagerkammern zu der Vorrichtung zu führen.

Bei einer konstruktiv einfachen und bauraumgünstigen Ausführung des erfindungsgemäßen Flugtriebwerks ist die Vorrichtung drehfest mit der zweiten Welle des Flugtriebwerks verbunden und vorzugsweise direkt auf der zweiten Welle angeordnet.

Die Vorrichtung ist bei einer hierzu alternativen Ausführung des erfindungsgemäßen Flugtriebwerks drehfest mit einer in Wirkverbindung mit der zweiten Welle stehenden Antriebswelle verbunden, die zum Antrieb von Hilfsgeräten einer Hilfsgerätegetriebevorrichtung vorgesehen ist. Die Antriebswelle steht vorzugsweise über eine Kegelradstufe mit der zweiten Welle in Eingriff und ist hierdurch auf einfache Weise mit einer für eine gute Abscheideleistung erforderlichen hohen Drehzahl antreibbar. Vorzugsweise ist die Vorrichtung in einem bezüglich der Triebwerksachse radial inneren Endbereich der Antriebswelle angeordnet.

Die Vorrichtung zum Abscheiden von Öl ist vorzugsweise als Zentrifugalölabscheider ausgeführt, der auch als Breather bezeichnet wird. Die im Wesentlichen ringförmig ausgeführte Vorrichtung umfasst die zweite Welle insbesondere umfangsseitig.

Bei einer vorteilhaften Ausführung eines erfindungsgemäßen Flugtriebwerks ist die Vorrichtung zum Abscheiden von Öl mit einem in Rotation versetzbaren porösen Bereich ausgeführt. Mittels des porösen Bereichs der Vorrichtung können Ölpartikel aus dem der Vorrichtung zugeführten Luft-Öl-Volumenstrom auf einfache Weise abgetrennt werden und beispielsweise einem Öltank zugeführt werden. Zur Separierung von großen Ölpartikeln ist insbesondere ein als Zentrifuge wirkender Bereich der Vorrichtung vorgesehen, wohingegen Ölpartikel mit kleineren Durchmessern vorteilhafterweise durch den im Ölabscheider angeordneten und vorzugsweise als Metallschaum bzw. als Metallschaumring ausgeführten porösen Bereich aufgefangen und so ebenfalls aus dem Luft-Öl-Volumenstrom gefiltert werden können.

Die Vorrichtung zum Abscheiden von Öl ist auf konstruktiv einfache Weise mit der zweiten Welle in Wirkverbindung bringbar, wenn sie eine Gehäuseeinrichtung aufweist, mittels der die Vorrichtung drehfest auf der Welle angeordnet ist.

Bei einer vorteilhaften Ausführung des erfindungsgemäßen Flugtriebwerks weist das Flugtriebwerk eine dritte, um die Zentralachse drehbar gelagerte Welle auf, die mit einer größeren Drehzahl als die zweite Welle des Flugtriebwerks angetrieben ist, wobei die Vorrichtung mit der zweiten oder dritten Welle in Wirkverbindung steht. Auch bei einem derartigen, mit drei Wellen ausgeführten Flugtriebwerk, bei dem die erste Welle eine Niederdruckwelle, die zweite Welle eine Mitteldruckwelle und die dritte Welle eine Hochdruckwelle darstellt, kann mittels der Vorrichtung auf kostengünstige und gewichtsoptimierte Weise eine hohe Abscheideleistung erzielt werden. Die Vorrichtung kann bei einem derartigen Flugtriebwerk sowohl direkt auf der zweiten Welle oder auf der dritten Welle angeordnet oder mit einer dieser Wellen in oben näher beschriebenem Umfang wirkverbunden sein.

Wenn die die Vorrichtung lagernde Welle als Hohlwelle ausgeführt ist, kann die im Bereich der Vorrichtung gereinigte Luft auf einfache Weise durch die Hohlwelle aus dem Flugtriebwerk abgeführt werden. Ist die Vorrichtung auf der zweiten oder auf der dritten Welle des Flugtriebwerks angeordnet, ist die gereinigte Luft dabei jeweils durch eine dieser Wellen hindurch insbesondere in einen Abgasstrahl des Flugtriebwerks leitbar. Wenn die Vorrichtung dagegen auf der Antriebswelle der Hilfsgerätegetriebeeinrichtung angeordnet ist, wird die gereinigte Luft über ein Leitungssystem durch die Hilfsgerätegetriebeeinrichtung hindurch insbesondere an die Umgebung abgegeben.

Unter gereinigter Luft wird vorliegend ein aus der Vorrichtung abgeführter Fluidvolumenstrom verstanden, der eine geringere Ölbeladung als der dem Ölabscheider zugeführte Luft-Öl-Volumenstrom aufweist.

Bei einer vorteilhaften Ausführung eines erfindungsgemäßen Flugtriebwerks ist eine Dichteinrichtung vorgesehen, mittels welcher die Kammer gegenüber einem von der ersten Welle begrenzten Bereich, insbesondere einem von der als Hohlwelle ausgeführten Welle begrenzten Innenraum, abdichtbar ist. Die Dichteinrichtung kann beispielsweise als Labyrinthdichtung oder als hydraulische Dichtung ausgeführt sein, wobei auch andere geeignete Dichteinrichtungen vorgesehen sein können.

Die Kammer des Flugtriebwerks ist vorzugsweise als eine wenigstens eine Lagereinrichtung aufweisende Lagerkammer ausgeführt, in deren Bereich im Betrieb des Flugtriebwerks durch eine Vermischung von zur Abdichtung der Lagerkammern vorgesehener Sperrluft, d. h. insbesondere von unter Hochdruck stehender Luft aus einem Kernstromkanal des Flugtriebwerks, und mit zur Schmierung der Lagereinrichtungen vorgesehenem Öl ein Luft-Öl-Gemisch entsteht. Bei zweiwellig ausgeführten Flugtriebwerken sind dabei in axialer Richtung des Flugtriebwerks zumindest eine vordere und eine hintere Lagerkammer vorgesehen, wohingegen bei dreiwellig ausgeführten Flugtriebwerken zusätzlich wenigstens eine mittlere Lagerkammer vorgesehen sein kann. Die Vorrichtung kann dabei prinzipiell in jeder dieser Lagerkammern angeordnet sein.

Bei einer vorteilhaften Ausführung des erfindungsgemäß ausgeführten Flugtriebwerks ist innerhalb einer weiteren Lagerkammer des Flugtriebwerks eine weitere Vorrichtung zum Abscheiden von Öl vorgesehen, die mit der zweiten Welle bzw. dritten Welle des Flugtriebwerks wirkverbunden ist, so dass auch in diesem Bereich des Flugtriebwerks eine hohe Abscheidung von Öl aus einem auftretenden Luft-ÖlGemisch erzielbar ist.

Um Luft-Öl-Volumenströme im Bereich mehrerer Lagerkammern auf kostengünstige und bauraumoptimierte Weise reinigen zu können, kann wenigstens ein Leitungsbereich vorgesehen sein, über den ein Luft-Öl-Volumenstrom aus der wenigstens einen weiteren Lagerkammer in die Lagerkammer des Flugtriebwerks zuführbar ist. Hierdurch sind die im Bereich von zwei oder mehreren Lagerkammern vorliegenden Luft-Öl-Gemische vorteilhafterweise mit einer einzigen Vorrichtung reinigbar.

Bei einer vorteilhaften Weiterbildung eines erfindungsgemäßen Flugtriebwerks ist wenigstens ein Leitungsbereich vorgesehen, über den ein Luft-ÖlVolumenstrom aus einer Tankvorrichtung und/oder aus einer Gehäuseeinrichtung einer Hilfsgerätegetriebeeinrichtung in die die Vorrichtung aufweisende Lagerkammer des Flugtriebwerks führbar ist. Hierdurch ist vorteilhafterweise auch Öl aus diesen Bereichen abgeführten Luft-Öl-Volumenströmen im Bereich der mit der zweiten oder mit der dritten Welle wirkverbundenen Vorrichtung abscheidbar.

Sowohl die in den Patentansprüchen angegebenen Merkmale als auch die in den nachfolgenden Ausführungsbeispielen des erfindungsgemäßen Flugtriebwerks angegebenen Merkmale sind jeweils für sich alleine oder in beliebiger Kombination miteinander geeignet, den erfindungsgemäßen Gegenstand weiterzubilden.

Weitere Vorteile und vorteilhafte Ausführungsformen des erfindungsgemäßen Flugtriebwerks ergeben sich aus den Patentansprüchen und den nachfolgend unter Bezugnahme auf die Zeichnung prinzipmäßig beschriebenen Ausführungsbeispielen, wobei zugunsten der Übersichtlichkeit jeweils für bau- und funktionsgleiche Bauteile dieselben Bezugszeichen verwendet werden.

Es zeigt:
- Fig. 1: eine stark schematisierte Längsschnittansicht eines mit einer Niederdruckwelle und einer Hochdruckwelle ausgeführten Flugtriebwerks;
- Fig. 2: eine vereinfachte Teilschnittansicht des Flugtriebwerks der Fig. 1, wobei eine im Bereich einer vorderen Lagerkammer angeordnete und drehfest mit der Hochdruckwelle verbundene Vorrichtung zum Abscheiden von Öl ersichtlich ist; und
- Fig. 3: eine vereinfachte Teilschnittansicht eines alternativ ausgeführten Flugtriebwerks, bei dem eine Vorrichtung zum Abscheiden von Öl drehfest mit einer Antriebswelle einer Hilfsgerätegetriebeeinrichtung verbunden ist, wobei die Antriebswelle über ein Kegelradgetriebe an die Hochdruckwelle des Flugtriebwerks gekoppelt ist.

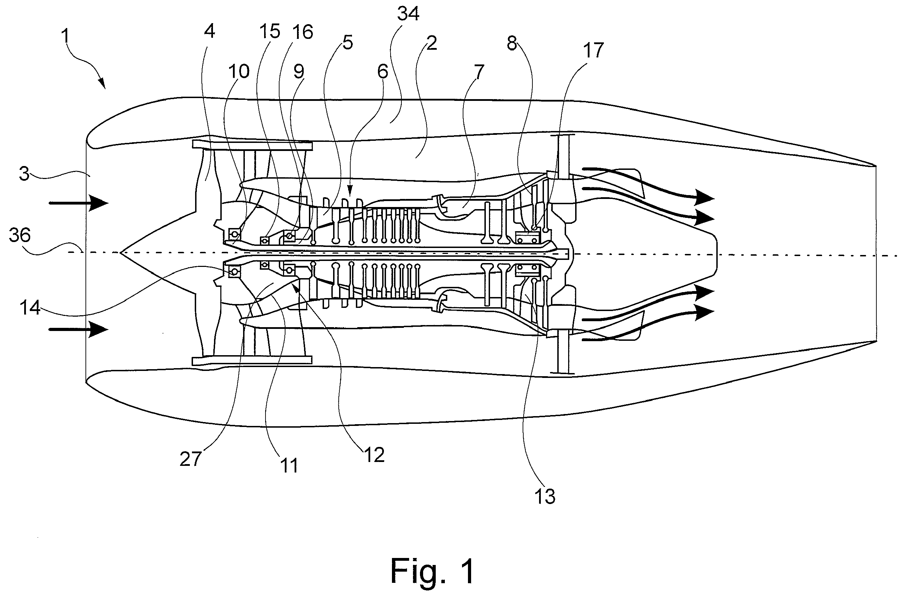

Fig. 1 zeigt ein Flugtriebwerk bzw. Strahltriebwerk 1 in einer Längsschnittansicht. Das Flugtriebwerk 1 ist mit einem Nebenstromkanal 2 und einem Einlaufbereich 3 ausgebildet, wobei sich an den Einlaufbereich 3 stromab ein Bläser 4 in an sich bekannter Art und Weise anschließt. Wiederum stromab des Bläsers 4 teilt sich der Fluidstrom im Flugtriebwerk 1 in einen Nebenstrom und einen Kernstrom auf, wobei der Nebenstrom durch den Nebenstromkanal 2 und der Kernstrom in einen Triebwerkskern 5 strömt, der wiederum in an sich bekannter Art und Weise mit einer Verdichtereinrichtung 6, einem Brenner 7 und einer Turbineneinrichtung 8 ausgeführt ist.

Das Flugtriebwerk 1 ist vorliegend zweiwellig mit einer eine Niederdruckwelle 10 darstellenden ersten Welle und einer eine Hochdruckwelle 9 darstellenden zweiten Welle ausgeführt, wobei die Niederdruckwelle 10 und die Hochdruckwelle 9 jeweils um eine Zentralachse 36 drehbar gelagert sind. Die Niederdruckwelle 10 ist drehfest mit dem Bläser 4 verbunden und rotiert im Betrieb des Flugtriebwerks 1 mit einer geringeren Drehzahl um die Zentralachse 36 als die Hochdruckwelle 9. Zur Lagerung der Wellen 9, 10 untereinander und gegenüber einer Gehäusevorrichtung 11 des Flugtriebwerks 1 sind mehrere Lagereinrichtungen 14, 15, 16, 17 vorgesehen. Die jeweils als Wälzlager ausgeführten Lagereinrichtungen 14, 15, 16 sind vorliegend in einer in axialer Richtung des Flugtriebwerks 1 vorderen Lagerkammer 12 angeordnet, während die ebenfalls als Wälzlager ausgeführte Lagereinrichtung 17 in einer in axialer Richtung des Flugtriebwerks 1 hinteren Lagerkammer 13 montiert ist.

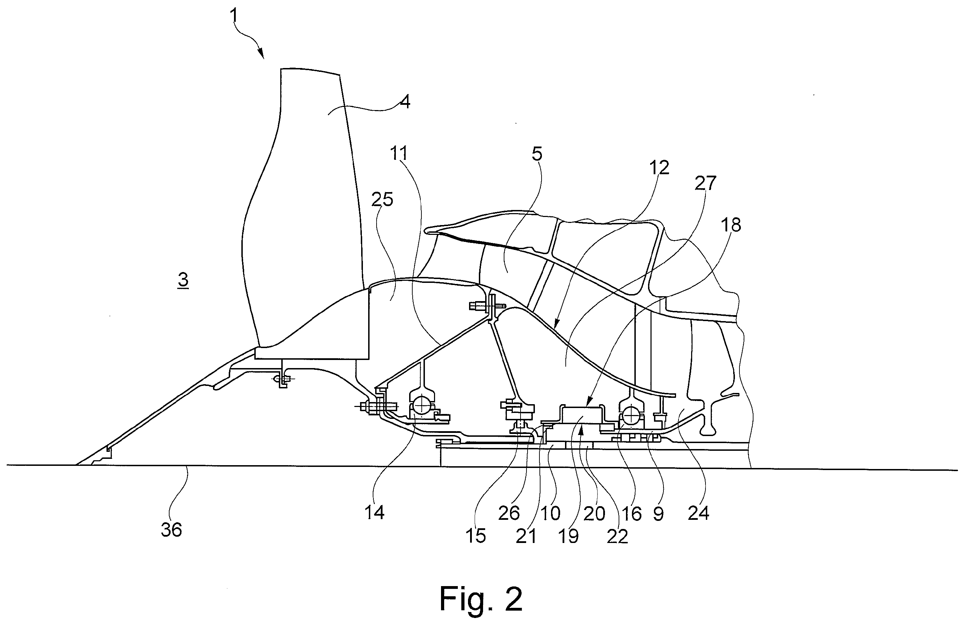

In Fig. 2 ist die vordere Lagerkammer 12 vergrößert gezeigt. Eine Vorrichtung 18 zum Abscheiden von Öl ist vorliegend als Zentrifugalölabscheider ausgeführt und wird auch als Breather bezeichnet. Die Vorrichtung 18, deren Funktionsweise im Folgenden näher erläutert wird, weist einen mit einem Metallschaumring 19 ausgeführten porösen Bereich 20 auf, der über eine Gehäuseeinrichtung 21 der Vorrichtung 18 drehfest mit der Hochdruckwelle 9 verbunden ist.

Im Betrieb des Flugtriebwerks 1 werden die Lagerkammern 12, 13 mit einem dem Kernstrom entnommenen Luftvolumenstrom, der auch als Kompressorzapfluft bezeichnet wird, beaufschlagt und hierdurch gegenüber an die Lagerkammer 12 angrenzenden Kammern 24, 25 abgedichtet. Die Kompressorzapfluft vermischt sich dabei mit zur Schmierung der Lagereinrichtungen 14, 15, 16 vorgesehenem Öl, wodurch ein Luft-Öl-Volumenstrom bzw. ein Ölnebel im Bereich der Lagerkammer 12 entsteht. Bevor verbrauchte Luft aus dem Flugtriebwerk 1 abgeführt wird, ist die Ölbeladung der im Flugtriebwerk 1 verwendeten Luft auf ein gefordertes Maß abzusenken, zu dem ein Ölverbrauch des Flugtriebwerks 1 und unerwünschte Emissionen gering sind.

Die Niederdruckwelle 10 und die Hochdruckwelle 9 sind jeweils als Hohlwellen ausgeführt, wobei die Niederdruckwelle 10 in einem axialen Bereich des Flugtriebwerks 1 wenigstens eine Ausnehmung 22 aufweist, in deren Bereich die Vorrichtung 18 mit der Hochdruckwelle 9 verbunden ist. Durch die Ausnehmung 22 kann der Luft-Öl-Volumenstrom von der Lagerkammer 12 durch die Hochdruckwelle 9 in die Niederdruckwelle 10 strömen und durch die in axialer Richtung des Flugtriebwerks 1 in einem heckwärtigen Bereich in einen Abgasstrahl mündende Niederdruckwelle 10 an die Umgebung abgegeben werden. Da ein Druck im Betrieb des Flugtriebwerks 1 in der Lagerkammer 12 größer als der Druck im Abgasstrahl ist, strömt der im Betrieb des Flugtriebwerks 1 im Bereich der Lagerkammer 12 vorliegende Ölnebel als Luft-Öl-Volumenstrom in Richtung der Vorrichtung 18.

Die Vorrichtung 18 wirkt auf den zugeführten Luft-Öl-Volumenstrom als Zentrifuge, mittels welcher ein Anteil an Öl des durch den porösen Bereich 26 der Vorrichtung 18 strömenden Luft-Öl-Volumenstroms reduziert wird. Weiterhin wird beim Durchströmen des porösen Bereichs 20, der wie ein Prallfilter wirkt, Öl aus dem Luft-Öl-Volumenstrom abgeschieden. Das im Bereich des porösen Bereichs 26 aus dem Luft-Öl-Volumenstrom ausgefilterte Öl wird in radialer Richtung des Flugtriebwerks 1 nach außen aus der Vorrichtung 18 herausgeschleudert, in bekannter Weise aus der Lagerkammer 12 abgesaugt und einem beispielsweise im Bereich einer nicht näher dargestellten Hilfsgerätegetriebeeinrichtung angeordneten Öltank zugeführt. Die im Bereich der Vorrichtung 18 gereinigte Luft, d. h. ein Fluidvolumenstrom mit einer geringeren Ölbeladung als der dem Ölabscheider zugeführte Luft-ÖlVolumenstrom, wird in radialer Richtung des Flugtriebwerks 1 durch die wenigstens eine Ausnehmung 22 in einen von der Niederdruckwelle 10 begrenzten Innenraum 23 geleitet und von dort heckwärts in Richtung des Abgasstrahls und aus dem Flugtriebwerk 1 geführt. Um die Lagerkammer 12 gegenüber dem Innenraum 23 der Niederdruckwelle 10 abzudichten, ist zwischen der Gehäuseeinrichtung 21 und der Niederdruckwelle 10 eine als Labyrinthdichtung ausgeführte Dichteinrichtung 26 angeordnet.

Die insgesamt ringförmig ausgeführte Vorrichtung 18 umfasst die Hochdruckwelle 9 in Umfangsrichtung und ist hierbei drehfest mit der Hochdruckwelle 9 verbunden, so dass die Vorrichtung 18 mit der gleichen Drehzahl wie die Hochdruckwelle 9 angetrieben wird. Hierdurch wird die in einem Innenraum 27 der vorderen Lagerkammer 12 angeordnete Vorrichtung 18 im Betrieb des Flugtriebwerks 1 mit hohen Drehzahlen, beispielsweise mit etwa 18.000 bis 20.000 Umdrehungen pro Minute angetrieben. Dabei wird ein großer Anteil des Öls, das der Vorrichtung 18 über den Luft-Öl-Volumenstrom zugeführt wird, durch die Vorrichtung 18 aus dem Luft-Öl-Volumenstrom abgeschieden und der gereinigte Luftstrom weist einen vorteilhafterweise geringen Ölanteil auf.

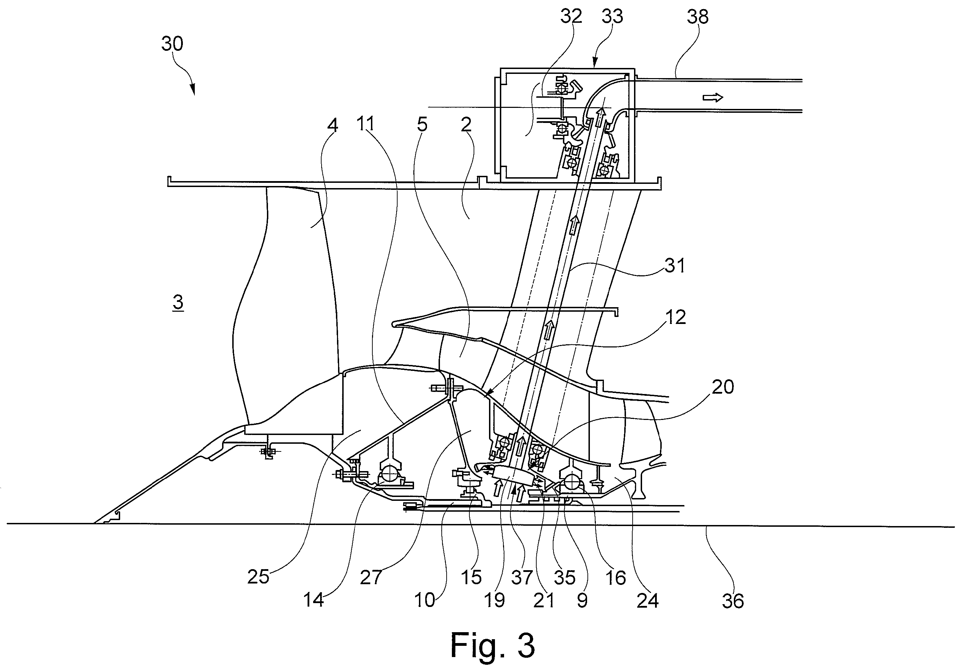

In Fig. 3 ist ein alternativ zu dem Flugtriebwerk 1 ausgeführtes Flugtriebwerk 30 gezeigt, welches hinsichtlich seines Aufbaus und seiner Funktion im Prinzip vergleichbar zu dem Flugtriebwerk 1 ausgebildet ist. Entsprechend wird im Folgenden lediglich auf die Unterschiede des Flugtriebwerks 30 gegenüber dem Flugtriebwerk 1 eingegangen und bezüglich der weiteren Funktionsweise des Flugtriebwerks 30 auf die vorstehende Beschreibung zu Fig. 1 und Fig. 2 verwiesen.

Über eine Antriebswelle 31 sind Hilfsgerätegetriebewellen 32 einer stark vereinfacht gezeigten Hilfsgerätegetriebeeinrichtung 33 antreibbar. Die Hilfsgerätegetriebeeinrichtung 33 ist vorliegend im Bereich eines den Nebenstromkanal 2 außenseitig begrenzenden Gehäuses 34 angeordnet. Die als Hohlwelle ausgeführte Antriebswelle 31 ist hier über eine Kegelradstufe 35 an die Hochdruckwelle 9 gekoppelt und über Lagereinrichtungen 36 und 37 in der Gehäusevorrichtung 11 bzw. in dem Gehäuse 34 gelagert. Die Antriebswelle 31 dreht somit je nach Übersetzungsverhältnis im Bereich der Kegelradstufe mit einer mit der Drehzahl der Hochdruckwelle 9 korrespondierenden Drehzahl, die größer als eine Drehzahl der Niederdruckwelle 10 ist.

In einem einer Zentralachse 36 des Triebwerks 1 zugewandten Bereich der Antriebswelle 31 ist eine wiederum ringförmig ausgeführte Vorrichtung 37 innerhalb der vorderen Lagerkammer 12 drehfest mit der Antriebwelle 31 verbunden und wird von der Antriebwelle 31 angetrieben. Die als Hohlwelle ausgeführte Antriebswelle 31 ist in einem radial äußeren Endbereich im Bereich der Hilfsgerätegetriebeeinrichtung 33 mit einem Leitungsbereich 38 verbunden. Der Leitungsbereich 38 ist wiederum mit einem Außenbereich des Gehäuses 34 verbunden, so dass die Lagerkammer 12 über die Antriebswelle 31 und den Leitungsbereich 38 mit der Umgebung wirkverbunden ist. Im Bereich der Lagerkammer 12 liegt wie vorstehend bereits näher beschrieben im Betrieb des Flugtriebwerks 1 ein gegenüber dem Umgebungsdruck höherer Druck vor. Dies führt dazu, dass ein Luft-Öl-Volumenstrom aus der Lagerkammer 12 der Vorrichtung 37 zugeführt wird. Der Luft-Öl-Volumenstrom wird in radialer Richtung des Flugtriebwerks 1 im Wesentlichen von Innen nach Außen geleitet und im Bereich der Vorrichtung 37 Öl aus dem Luft-ÖlVolumenstrom abgeschieden. Das abgeschiedene Öl wird aus der Vorrichtung 37 durch die Antriebswelle 31 hindurch zurück in die Lagerkammer 12 befördert, während die im Bereich der Vorrichtung 37 gereinigte Luft an die Umgebung abgegeben wird.

Die Vorrichtung 37 ist im Prinzip vergleichbar zu der Vorrichtung 18 ausgeführt, so dass bezüglich der weiteren Funktionsweise der Vorrichtung 37 auf die Ausführungen zu der Vorrichtung 18 verwiesen wird.

### Bezugszeichenliste

- 1: Flugtriebwerk
- 2: Nebenstromkanal
- 3: Einlaufbereich
- 4: Bläser
- 5: Triebwerkskern
- 6: Verdichtereinrichtung
- 7: Brenner
- 8: Turbineneinrichtung
- 9: Hochdruckwelle
- 10: Niederdruckwelle
- 11: Gehäusevorrichtung
- 12: vordere Lagerkammer
- 13: hintere Lagerkammer
- 14: Lagereinrichtung; Wälzlager
- 15: Lagereinrichtung; Wälzlager
- 16: Lagereinrichtung; Wälzlager
- 17: Lagereinrichtung; Wälzlager
- 18: Vorrichtung zum Abscheiden von Öl
- 19: Metallschaumring
- 20: poröser Bereich
- 21: Gehäuseeinrichtung
- 22: Ausnehmung
- 23: Innenraum
- 24: Kammer
- 25: Kammer
- 26: Dichteinrichtung; Labyrinthdichtung
- 27: Innenraum
- 30: Flugtriebwerk
- 31: Antriebswelle
- 32: Hilfsgerätegetriebewelle
- 33: Hilfsgerätegetriebeeinrichtung
- 34: Gehäuse
- 35: Kegelradstufe
- 36: Zentralachse
- 37: Vorrichtung
- 38: Leitungsbereich

## Patentansprüche

1. Flugtriebwerk (1; 30) mit wenigstens zwei jeweils um eine Zentralachse (36) des Flugtriebwerks (1; 30) drehbar gelagerten Wellen (9, 10), wobei eine erste Welle (10) im Betrieb des Flugtriebwerks (1; 30) eine niedrigere Drehzahl als eine zweite Welle (9) des Flugtriebwerks (1; 30) aufweist, und wobei eine wenigstens bereichsweise von einer der Wellen (9, 10) begrenzte Kammer (12, 13) vorgesehen ist, innerhalb der eine mit einer der Wellen (9, 10) des Flugtriebwerks (1; 30) in Wirkverbindung stehende Vorrichtung (18; 37) zum Abscheiden von Öl aus einem Luft-Öl-Volumenstrom angeordnet ist, **dadurch gekennzeichnet, dass** die Vorrichtung (18; 37) zum Abscheiden von Öl in Wirkverbindung mit der zweiten Welle (9) des Flugtriebwerks (1; 30) steht.

2. Flugtriebwerk nach Anspruch 1, **dadurch gekennzeichnet, dass** die Vorrichtung (18) drehfest mit der zweiten Welle (9) des Flugtriebwerks (1) verbunden ist.

3. Flugtriebwerk nach Anspruch 1, **dadurch gekennzeichnet, dass** die Vorrichtung (37) drehfest mit einer in Wirkverbindung mit der zweiten Welle (9) stehenden Antriebswelle (31) verbunden ist, die zum Antrieb von Hilfsgeräten einer Hilfsgerätegetriebeeinrichtung (33) vorgesehen ist.

4. Flugtriebwerk nach einem der Ansprüche 1 bis 3, **dadurch gekennzeichnet, dass** die Vorrichtung (18; 37) zum Abscheiden von Öl als Zentrifugalabscheider ausgeführt ist.

5. Flugtriebwerk nach einem der Ansprüche 1 bis 4, **dadurch gekennzeichnet, dass** die Vorrichtung (18; 37) mit einem in Rotation versetzbaren porösen Bereich (20) ausgeführt ist.

6. Flugtriebwerk nach einem der Ansprüche 1 bis 5, **dadurch gekennzeichnet, dass** die Vorrichtung (18; 37) zum Abscheiden von Öl eine Gehäuseeinrichtung (21) aufweist, mittels der die Vorrichtung (18; 37) drehfest auf der Welle (9; 31) angeordnet ist.

7. Flugtriebwerk nach einem der Ansprüche 1 bis 6, **dadurch gekennzeichnet, dass** eine Dichteinrichtung (26) vorgesehen ist, mittels welcher die Kammer (12) gegenüber einem von der ersten Welle (10) begrenzten Bereich (23) abdichtbar ist.

8. Flugtriebwerk nach einem der Ansprüche 1 bis 7, **dadurch gekennzeichnet, dass** eine dritte, um die Zentralachse drehbar gelagerte Welle vorgesehen ist, die mit einer größeren Drehzahl als die zweite Welle des Flugtriebwerks angetrieben ist, wobei die Vorrichtung mit der zweiten oder dritten Welle in Wirkverbindung steht.

9. Flugtriebwerk nach einem der Ansprüche 1 bis 8, **dadurch gekennzeichnet, dass** die die Vorrichtung (18; 37) lagernde Welle (9; 31) als Hohlwelle ausgeführt ist.

10. Flugtriebwerk nach einem der Ansprüche 1 bis 9, **dadurch gekennzeichnet, dass** die Kammer (12, 13) des Flugtriebwerks (1; 30) als eine eine Lagereinrichtung (14, 15, 16, 17) aufweisende Lagerkammer ausgeführt ist.

11. Flugtriebwerk nach Anspruch 10, **dadurch gekennzeichnet, dass** im Bereich einer weiteren Lagerkammer des Flugtriebwerks eine weitere Vorrichtung zum Abscheiden von Öl drehfest mit der zweiten Welle oder mit der dritten Welle des Flugtriebwerks verbunden ist.

12. Flugtriebwerk nach einem der Ansprüche 10 oder 11, **dadurch gekennzeichnet, dass** ein Leitungsbereich vorgesehen ist, über den ein Luft-ÖlVolumenstrom aus der weiteren Lagerkammer in die Lagerkammer des Flugtriebwerks führbar ist.

13. Flugtriebwerk nach einem der Ansprüche 1 bis 12, **dadurch gekennzeichnet, dass** ein Leitungsbereich vorgesehen ist, über den ein Luft-Öl-Volumenstrom aus einer Tankvorrichtung in die Lagerkammer des Flugtriebwerks führbar ist.

14. Flugtriebwerk nach einem der Ansprüche 1 bis 13, **dadurch gekennzeichnet, dass** ein Leitungsbereich vorgesehen ist, über den ein Luft-Öl-Volumenstrom aus einer Gehäuseeinrichtung einer Hilfsgerätegetriebeeinrichtung in die Lagerkammer des Flugtriebwerks führbar ist.
